# EUROPEAN PATENT APPLICATION

(11) **EP 4 390 086 A1**
(43) Date of publication of application: **26.06.2024**
(21) Application number: 23214237.2
(22) Date of filing: 05.12.2023
(51) Int. Cl.: F02B 75/22, B60R 16/02, F02B 29/00, F02B 29/04, F02M 35/104

(54) **ENGINE**

(30) Priority: 19.12.2022 JP 2022201693
(71) Applicant: Yanmar Holdings Co., Ltd., Osaka-shi, Osaka (JP)
(72) Inventor: HASEGAWA, Shogo, Osaka-shi (JP)
(74) Representative: Dennemeyer & Associates S.A.

(57) **Abstract**

[Problem] To provide a technique capable of suppressing damage of an electric wire disposed in an engine.

[Solution] An exemplary engine includes an engine body including at least one cylinder row in which a plurality of cylinders are arranged in a front-rear direction, an intake pipe disposed on one side surface of the engine body and extending in the front-rear direction, and a first electric wire disposed below the intake pipe and along the one side surface.

## Description

### TECHNICAL FIELD

The present invention relates to an engine.

### BACKGROUND ART

Conventionally, an engine is provided with electric components such as an injector, an alternator, a starter, and various sensors. The engine provided with the electric components is provided with an electric power line for transmitting electric power and a signal line for transmitting a signal.

For example, Patent Document 1 discloses an engine including a plurality of wire harnesses. The plurality of wire harnesses are supported in a state of being protected by a wire harness cover attached to an intake manifold.

### PRIOR ART DOCUMENT

### PATENT DOCUMENT

Patent Document 1: Japanese Unexamined Patent Publication No. 2015-183565

### SUMMARY OF INVENTION

### TECHNICAL PROBLEM

For example, in a maintenance work of a large-sized engine used for power generation or a ship, a worker who performs the maintenance work may perform the work with his/her foot being placed on a component constituting the engine. For this reason, when a harness is attached to a component on which a foot can be easily placed, the harness may be unintentionally damaged during work.

In addition, a harness provided in an engine requires various measures for preventing damage, for example, preventing damage due to hot air generated from high-temperature components constituting the engine.

An object of the present invention is to provide a technique capable of suppressing damage to an electric wire disposed in an engine.

### SOLUTION TO PROBLEM

An exemplary engine of the present invention includes: an engine body including at least one cylinder row in which a plurality of cylinders are arranged in a front-rear direction; an intake pipe disposed on one side surface of the engine body and extending in the front-rear direction; and a first electric wire disposed below the intake pipe and along the one side surface.

### ADVANTAGEOUS EFFECTS OF INVENTION

According to the exemplary present invention, it is possible to suppress damage to an electric wire disposed in an engine.

### BRIEF DESCRIPTION OF DRAWINGS

FIG. 1 is a left side view showing the schematic configuration of an engine.
FIG. 2 is a front view showing the schematic configuration of the engine.
FIG. 3 is a plan view showing the schematic configuration of the engine.
FIG. 4 is a schematic view for explaining an injector included in the engine.
FIG. 5 is a perspective view showing a schematic configuration of an electric system included in the engine.
FIG. 6A is a view schematically showing a position of a wire harness on a left side surface of the engine.
FIG. 6B is a schematic view showing a part of a cross section taken along a line A-A in FIG. 6A.
FIG. 7 is a view schematically showing a position of a high-voltage power supply wire harness on a rear surface of the engine.
FIG. 8 is a view schematically showing a position of a wire harness on a right side surface of the engine.

### DESCRIPTION OF EMBODIMENTS

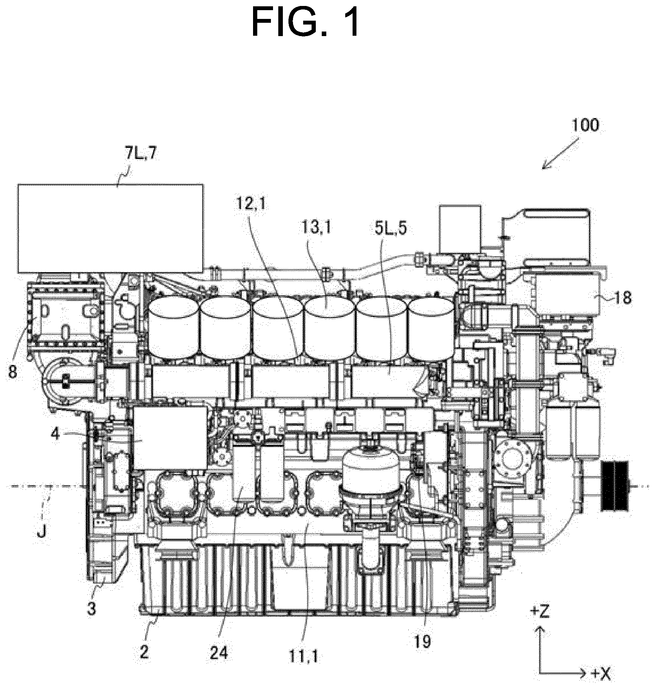

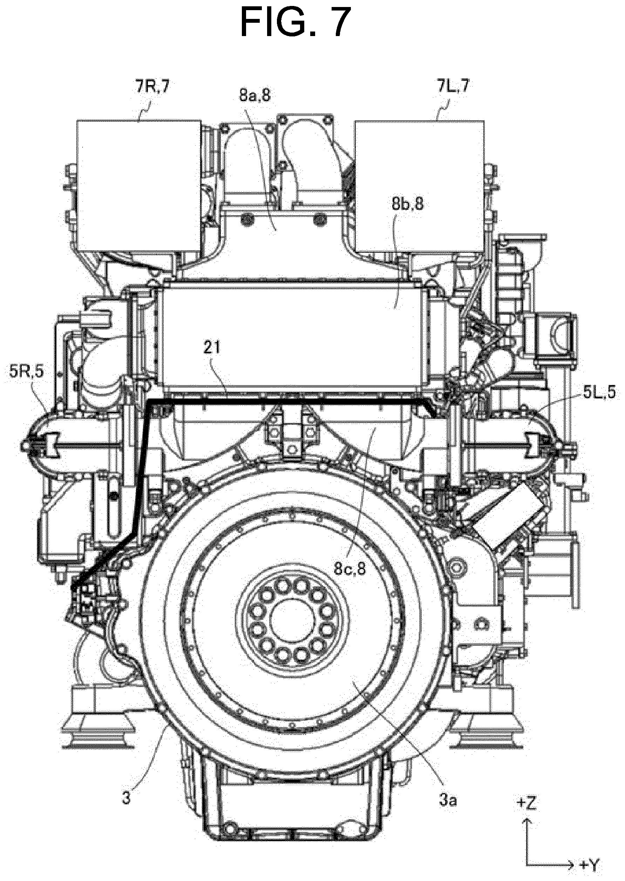

The following is a detailed description of an exemplary embodiment of the present invention with reference to the drawings. In the drawings, an XYZ coordinate system is shown as a 3D orthogonal coordinate system, as appropriate. In the following description, an X direction is defined as a front-rear direction, a Y direction is defined as a right-left direction, and a Z direction is defined as an up-down direction. A +X side is defined as a front side, and a -X side is defined as a rear side. A +Y side is defined as a left side, and a -Y side is defined as a right side. A +Z side is defined as an up side, and a -Z side is defined as a down side. Specifically, a direction in which a center line J of a crankshaft (output shaft) shown in FIG. 1 extends is defined as the front-rear direction. A side on which a cylinder block 11 is disposed with respect to a fly wheel 3a (see FIG. 7) accommodated in a fly wheel housing 3 is defined as the front side. The up-down direction is defined with the side on which an oil pan 2 is placed with respect to the cylinder block 11 being the down side. A direction orthogonal to the front-rear direction and the up-down direction is defined as the right-left direction, and the right side when viewed from the front toward the rear is defined as the right side and the left side when viewed from the front toward the rear is defined as the left side. Note that these directions are merely names used for an illustrative purpose, and are not intended to limit the actual positional relation and direction.

### <1. Overview of Engine>

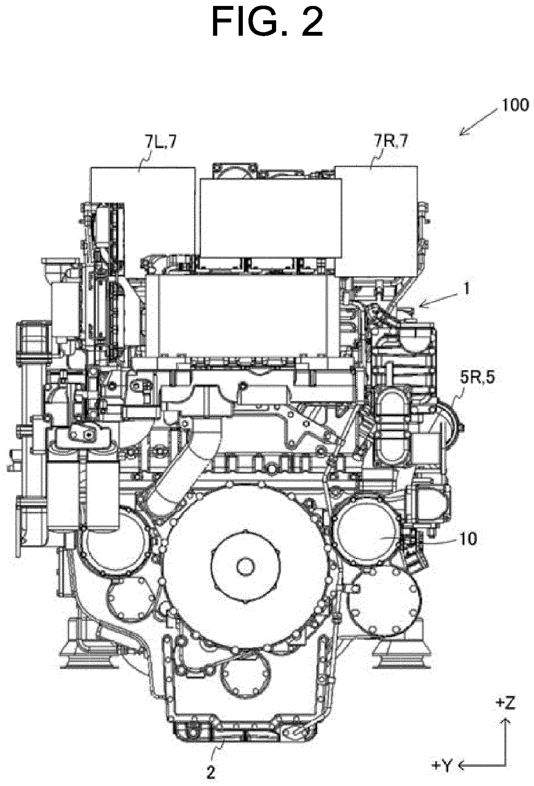

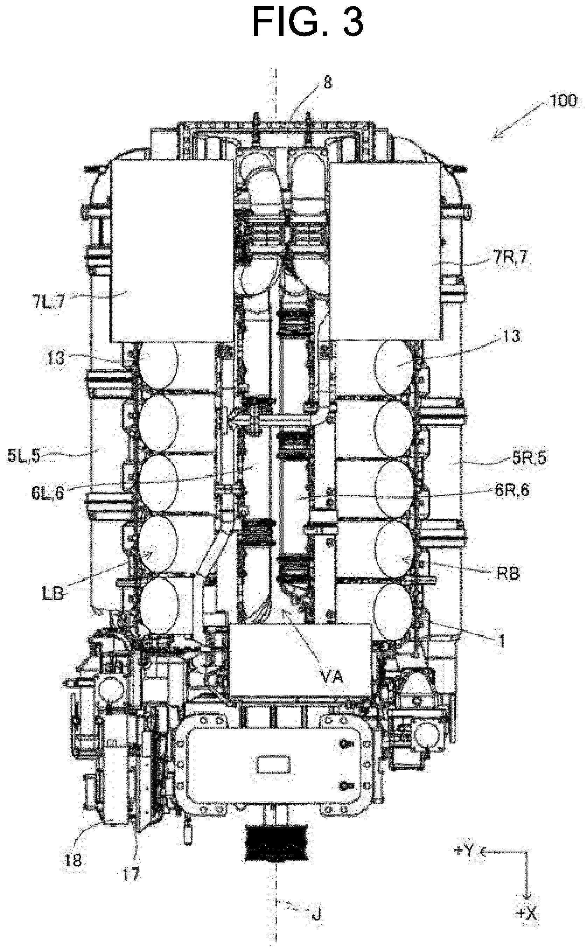

FIG. 1 is a left side view showing the schematic configuration of an engine 100 according to the embodiment of the present invention. FIG. 2 is a front view showing the schematic configuration of the engine 100 according to the embodiment of the present invention. FIG. 3 is a plan view showing the schematic configuration of the engine 100 according to the embodiment of the present invention. An outline of the engine 100 will be described mainly with reference to FIGS. 1 to 3.

Although not particularly limited, the engine 100 may be, for example, an engine used for power generation or a ship propulsion engine used for ship propulsion. The engine 100 is a large-sized engine. The engine 100 is a diesel engine. The engine 100 mainly includes an engine body 1 and an oil pan 2. The engine body 1 includes a cylinder block 11, a head block 12, and a head cover 13.

A plurality of pistons (not shown) and a crankshaft (not shown) connected to each piston and extending in the front-rear direction are disposed in the cylinder block 11. The crankshaft converts the reciprocating motion of the piston into a rotational motion. A fly wheel 3a (see FIG. 7 described later) housed in a fly wheel housing 3 is attached to a rear end of the crankshaft. The fly wheel 3a rotates integrally with the crankshaft and is used to take out power from the engine 100.

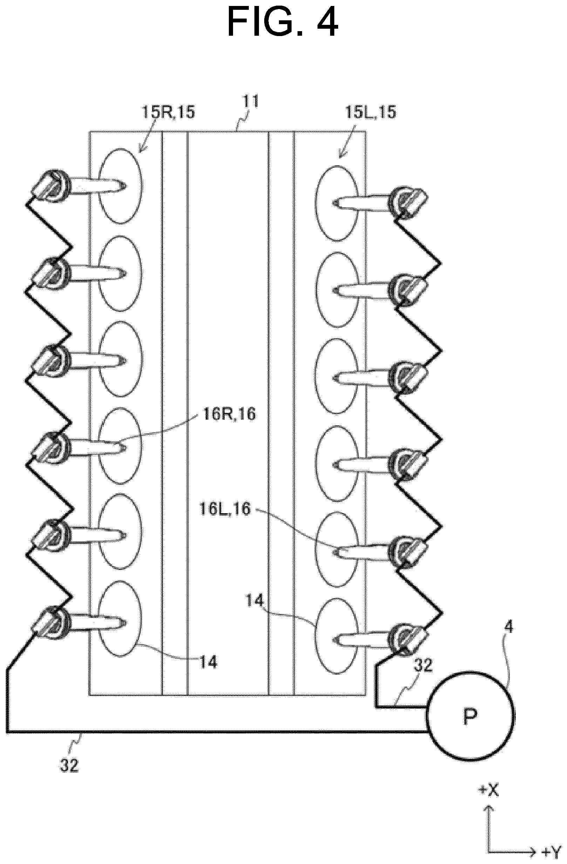

The cylinder block 11 has a cylinder row 15 (see FIG. 4 described later) in which a plurality of cylinders 14 are arranged in the front-rear direction. That is, the engine body 1 has at least one cylinder row 15 in which a plurality of cylinders 14 are arranged in the front-rear direction. Each of the plurality of pistons is disposed in each cylinder 14. In detail, the cylinder block 11 has the cylinder row 15 on each of the left and right sides. The engine 100 is a V-type engine having two cylinder rows 15 arranged in the left-right direction. Note that the engine 100 is, for example, a V-type 12-cylinder engine, and the number of cylinders 14 arranged in the front-rear direction in each of the left and right cylinder rows 15 is six.

The head block 12 is disposed above each cylinder 14 in an overlapping manner. That is, the engine body 1 includes six head blocks 12 arranged in the front-rear direction on each of the left and right sides. Each of the head blocks 12 has an intake port (not shown) for supplying gas to a combustion chamber including the cylinder 14, the head block 12, and the piston, and an exhaust port (not shown) for exhausting the gas from the combustion chamber.

The head cover 13 is disposed above each head block 12. That is, the engine body 1 has six head covers 13 arranged in the front-rear direction on each of the left and right sides. Each head cover 13 covers an intake valve and an exhaust valve (not shown) placed at the head block 12. An injector 16 is mounted on each head cover 13 (see FIG. 4 described later).

FIG. 4 is a schematic view for explaining the injector 16 included in the engine 100 according to the embodiment of the present invention. In FIG. 4, in order to facilitate understanding of the injector 16, the cylinder block 11 having the cylinders 14 is also shown. Hereinafter, among the cylinder rows 15 included in the engine 100, the cylinder row on the left side of the engine 100 is referred to as a left cylinder row 15L, and the cylinder row 15 on the right side of the engine 100 is referred to as a right cylinder row 15R. One injector 16 is provided for each cylinder 14 constituting the left cylinder row 15L. Further, one injector 16 is provided for each cylinder 14 constituting the right cylinder row 15R. Hereinafter, the injector 16 provided correspondingly to the left cylinder row 15L is referred to as a left injector 16L, and the injector 16 provided correspondingly to the right cylinder row 15R is referred to as a right injector 16R. In the present embodiment, the number of each of the left injectors 16L and the right injectors 16R is six.

One end portion (lower end portion) of each injector 16 on which an injection port for injecting a fuel is provided faces the combustion chamber. Each injector 16 injects the fuel supplied from a fuel pump 4 that discharges fuel at a high pressure, via the high-pressure fuel pipe 32 into the combustion chamber at an appropriate timing. The piston is reciprocated by a force generated by combustion of fuel injected into the combustion chamber. In the present embodiment, the fuel pump 4 is disposed on the rear side of the left side surface of the engine 100 (see FIG. 1).

The left cylinder row 15L, the head block 12, and the head cover 13 are provided on the left side of the engine 100 and constitute a left bank LB. The right cylinder row 15R, the head block 12, and the head cover 13 are provided on the right side of the engine 100 and constitute a right bank RB.

Further, the engine 100 includes an intake manifold (intake pipe) 5 and an exhaust manifold (exhaust pipe) 6.

The intake manifold 5 distributes intake air, which is air or air-fuel mixture, supplied from a turbocharger 7 (described in detail later) to each cylinder 14 (combustion chamber). Specifically, the intake manifolds 5 are arranged one by one on the left side surface and the right side surface of the engine body 1 correspondingly to the cylinder rows 15 arranged on the left side and right side respectively. The intake manifolds 5 disposed on the left side and the right side both extend in the front-rear direction. That is, the engine 100 includes an intake manifold (intake pipe) 5 disposed on one side surface of the engine body 1 and extending in the front-rear direction. In the present embodiment, the engine 100 further includes an intake manifold (intake pipe) 5 disposed on the other side surface of the engine body 1 and extending in the front-rear direction. The other side surface is a side surface opposite to the one side surface with the crankshaft interposed therebetween.

Hereinafter, the intake manifold 5 provided on the left side of the engine 100 correspondingly to the left cylinder row 15L is referred to as a left intake manifold 5L. The intake manifold 5 provided on the right side of the engine 100 correspondingly to the right cylinder row 15R is referred to as a right intake manifold 5R. The left intake manifold 5L and the right intake manifold 5R are disposed outside the V bank constituted by the left bank LB and the right bank RB.

The exhaust manifold 6 collects exhaust air from each cylinder (combustion chamber). The exhaust manifold 6 is disposed to extend in the front-rear direction between the left bank LB and the right bank RB. That is, the engine 100 includes the exhaust manifold (exhaust pipe) 6 disposed in an inter-bank area VA existing between a first bank including one of the two cylinder rows 15L and 15R and a second bank including the other of the two cylinder rows 15L and 15R. One of the first bank and the second bank is the left bank LB, and the other of the first bank and the second bank is the right bank RB.

In detail, two exhaust manifolds 6 are arranged correspondingly to the cylinder rows 15 arranged on the left and right sides respectively. The two exhaust manifolds 6 both extend in the front-rear direction. The two exhaust manifolds 6 are arranged side by side in the left-right direction inside the V bank composed of the left bank LB and the right bank RB. Hereinafter, the exhaust manifold 6 arranged on the left side in the V bank correspondingly to the left cylinder row 15L is referred to as a left exhaust manifold 6L. The exhaust manifold 6 arranged on the right side in the V bank correspondingly to the right cylinder row 15R is referred to as a right exhaust manifold 6R.

The turbocharger 7 is disposed at a rear upper portion of the engine 100. That is, the engine 100 is provided with the turbocharger 7. The turbocharger 7 pressurizes and compresses air or air-fuel mixture supplied from an outside of the engine 100 and supplies the pressurized and compressed air or air-fuel mixture to the intake manifold 5 via an intercooler 8. The turbocharger 7 is a turbocharger that uses the exhaust gas supplied from the exhaust manifold 6 as a drive source.

The intercooler 8 connected with the intake manifold 5 is supplied with cooling liquid by an operation of a cooling liquid pump 10, to thereby cool the intake air. That is, the engine 100 includes the intercooler 8 that cools the intake air from the turbocharger 7. The intercooler 8 is disposed on one side of the engine body 1 in the front-rear direction. The intercooler 8 is disposed on one side of the inter-bank area VA in the front-rear direction. Specifically, the intercooler 8 is disposed at one end portion of the engine body 1 and the inter-bank area VA. In the present embodiment, the cooling liquid is cooling water. The cooling liquid may be liquid other than water, such as antifreeze, for example. Antifreeze is, for example, liquid mixture of pure water and ethylene glycol in a given ratio.

The intake air supplied from the turbocharger 7 is pressurized and compressed, and thereby generates a compression heat and is increased in temperature. The intercooler 8 cools the intake air by heat exchange between the cooling liquid and the pressurized and compressed intake air. That is, providing the intercooler 8 allows the temperature of the intake air that is to be supplied to the intake manifold 5 to be adjusted to a desired temperature.

Specifically, the turbocharger 7 includes a left turbocharger 7L provided on the left side of the engine 100 and a right turbocharger 7R provided on the right side of the engine 100. The left turbocharger 7L supplies air or the like (intake air) to the left intake manifold 5L via the intercooler 8. The right turbocharger 7R supplies air or the like (intake air) to the right intake manifold 5R via the intercooler 8. The exhaust gas collected by the left exhaust manifold 6L is discharged to the outside via the left turbocharger 7L. The exhaust gas collected by the right exhaust manifold 6R is discharged to the outside via the right turbocharger 7R.

The oil pan 2 is placed below the cylinder block 11 and stores lubricant oil. The lubricant oil stored in the oil pan 2 is supplied to each part of the engine 100 that requires lubrication.

### <2. Electric System>

Next, the electric system 200 included in an engine 100 will be described.

### [2-1. Overview of Electric System]

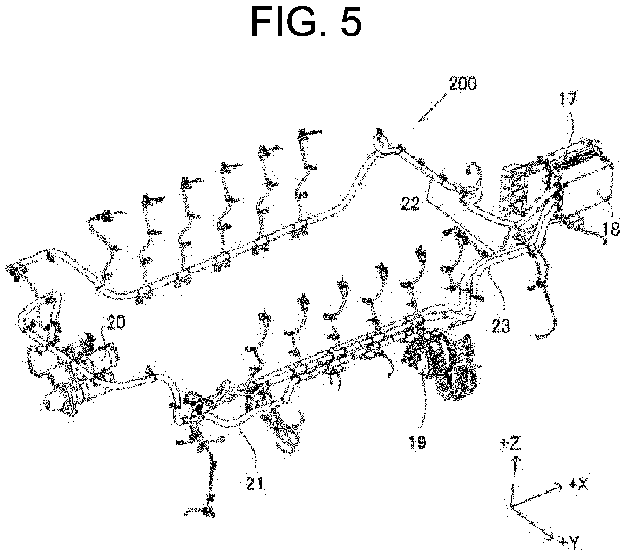

FIG. 5 is a perspective view showing a schematic configuration of the electric system 200 provided in the engine 100 according to the embodiment of the present invention. FIG. 5 is a view extracting and showing the electric system 200 provided in the engine 100. As shown in FIG. 5, the electric system 200 includes an engine control unit (ECU) 17, a junction box 18, an alternator 19, and a starter 20.

The ECU 17 controls the engine 100. The ECU 17 performs, for example, control of fuel injection, control of starting and stopping of the engine 100, and the like. The ECU 17 includes, for example, a central processing unit (CPU), a random access memory (RAM), and a read only memory (ROM).

The junction box 18 is a box that houses terminals, electric wires, and the like that relay between the ECU 17 and electric components. The electric components include, for example, the injector 16 and various sensors (not shown) disposed in the engine 100. In the present embodiment, the junction box 18 is disposed at a left upper portion of the front side of the engine 100 (see FIG. 1). The ECU 17 is disposed on the right side of the junction box 18.

The alternator 19 is a generator that generates AC electricity by rotational power generated by the rotation of the crankshaft. The alternator 19 is connected to the crankshaft via a belt or the like (not shown). The alternator 19 supplies electric power to each part of the engine 100. The electric power generated by the alternator 19 is charged in a battery (not shown). In the present embodiment, the alternator 19 is disposed closer to the front of the left side surface of the engine 100 (see FIG. 1).

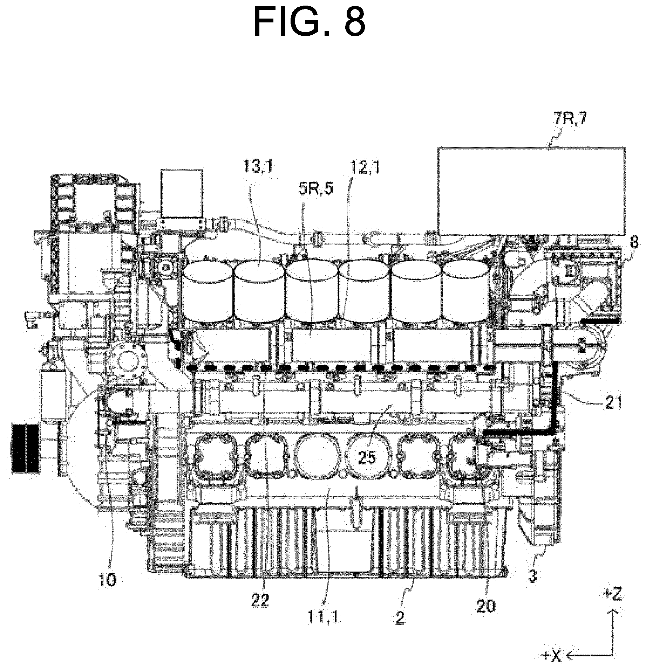

The starter 20 is supplied with electric power from a battery (not shown), and rotates the crankshaft when the engine 100 is started. The starter 20 is constituted by an electric actuator such as a motor. The starter 20 is coupled to a fly wheel 3a (see FIG. 3 described later) connected to the crankshaft via a gear or the like (not shown). In the present embodiment, the starter 20 is disposed to the rear of the right side surface of the engine 100 (see FIG. 8 described later).

As shown in FIG. 5, the electric system 200 includes a plurality of types of wire harnesses 21 to 23. The wire harnesses 21 to 23 are collective components in which a plurality of electric wires are bundled in accordance with a wiring mode. The plurality of types of wire harnesses 21 to 23 include a high-voltage power supply wire harness 21, a low-voltage power supply wire harness 22, and a signal wire harness 23.

The high-voltage power supply wire harness 21 is a wire harness including electric wires for connecting the alternator 19 and the starter 20 to the battery. The low-voltage power supply wire harness 22 is a wire harness including electric wires for supplying electric power to each injector 16 from the ECU 17. The signal wire harness 23 is a wire harness including electric wires for transmitting signals from various sensors included in the engine 100 to the ECU 17.

Specifically, the low-voltage power supply wire harness 22 includes a wire harness for supplying electric power to the six left injectors 16L (see FIG. 4) and a wire harness for supplying electric power to the six right injectors 16R (see FIG. 4).

### [2-2. Arrangement of Wire Harness]

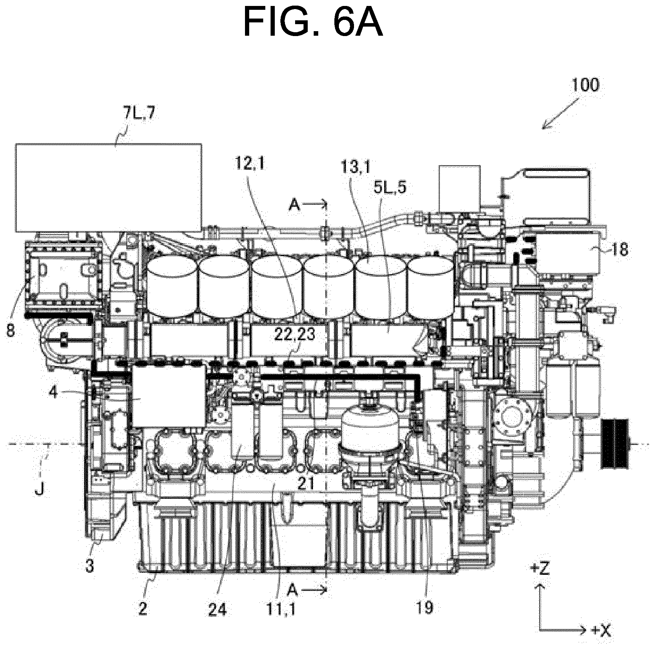

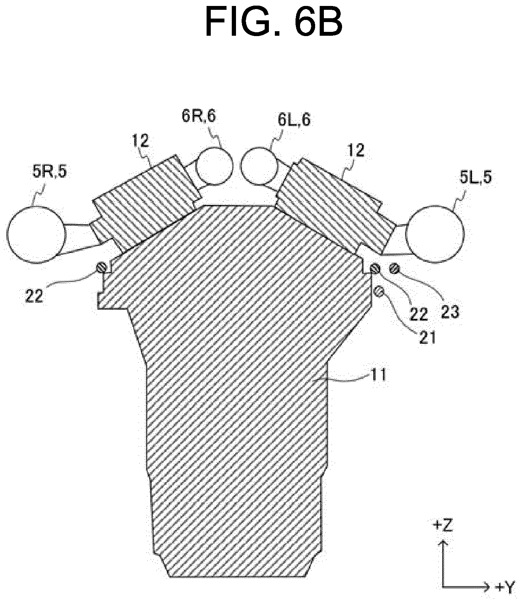

Next, the arrangement (routing) of the wire harnesses 21 to 23 in the engine 100 will be described in detail. FIG. 6A is a view schematically showing positions of the wire harnesses 21 to 23 on the left side surface of the engine 100. FIG. 6B is a schematic view showing a part of a cross section taken along the line A-A in FIG. 6A. FIG. 6B schematically shows the positions of the wire harnesses 21 to 23 in the engine 100.

As shown in FIGS. 6A and 6B, the engine 100 includes the high-voltage power supply wire harness 21 (indicated by a thick solid line) that is at least partially separated downward from the intake manifold (intake pipe) 5 and is disposed along one side surface (left side surface) of the engine body 1. Note that the state of being separated downward from the intake pipe 5 may be a state of being separated directly downward from the intake pipe 5 or a state of being separated obliquely downward from the intake pipe 5. The high-voltage power supply wire harness 21 includes a high-voltage electric wire through which electricity of a voltage higher than that of the other wire harnesses 22 and 23 flows. The high-voltage electric wire is an example of a first electric wire of the invention. That is, the engine 100 includes a first electric wire disposed below the intake pipe 5 and along one side surface of the engine body 1.

For example, when the engine 100 is a large-sized engine, a worker may put his/her foot on the intake pipe 5 during maintenance of the engine 100. In this regard, in the present embodiment, the high-voltage electric wire is disposed at a position separated downward from the intake pipe 5. For this reason, it is possible to reduce the possibility that the high-voltage electric wire is damaged due to the worker's foot placed on the intake pipe 5.

In the present embodiment, the engine 100 includes the low-voltage power supply wire harness 22 and the signal wire harness 23 (indicated by a thick broken line in FIG. 6A) in addition to the high-voltage power supply wire harness 21. Each of the low-voltage power supply wire harness 22 and the signal wire harness 23 includes a low-voltage electric wire through which electricity of a voltage lower than that of the high-voltage electric wire included in the high-voltage power supply wire harness 21 flows. The low-voltage electric wire is an example of a second electric wire of the present invention. That is, the engine 100 includes a second electric wire different from the first electric wire. Note that, although the first electric wire is a high-voltage electric wire and the second electric wire is a low-voltage electric wire in the present embodiment, this is merely an example. For example, the first electric wire may be a low-voltage electric wire, and the second electric wire may be a high-voltage electric wire.

At least a part of the low-voltage power supply wire harness 22 and the signal wire harness 23 is disposed at a position separated downward from the intake pipe 5 on the left side surface of the engine body 1. Note that the position separated downward from the intake pipe 5 may be a position separated directly downward from the intake pipe 5 or a position separated obliquely downward from the intake pipe 5. In addition, the low-voltage power supply wire harness 22 and the signal wire harness 23 are disposed at a distance from the high-voltage power supply wire harness 21. That is, the second electric wire is disposed on the one side surface of the engine body 1 to be separated downward from the intake pipe 5 and at a distance from the first electric wire.

According to the present embodiment, the low-voltage electric wire is disposed at a position separated downward from the intake pipe 5. Therefore, it is possible to reduce the possibility that the low-voltage electric wire is damaged due to the worker's foot placed on the intake pipe 5. In addition, since the high-voltage electric wire and the low-voltage electric wire are disposed at a distance from each other, it is possible to suppress the high-voltage electric wire and the low-voltage electric wire from being affected by each other's electromagnetic noise.

In the present embodiment, the intake pipe 5 is located downstream of the intercooler 8 in the flow direction of the intake air. That is, the intake air heated to a high temperature by the turbocharger 7 and then cooled by the intercooler 8 flows into the intake pipe 5. Therefore, the temperature around the intake pipe 5 can be made relatively low. As a result, it is possible to reduce the possibility that the high-voltage electric wire and the low-voltage electric wire disposed below the intake pipe 5 are damaged by the influence of the heat from the intake pipe 5.

Specifically, a part of each of the high-voltage power supply wire harness 21, the low-voltage power supply wire harness 22, and the signal wire harness 23 is disposed, on the left side surface of the engine 100, below the left intake pipe 5L to extend in a direction in which the left intake pipe 5L extends (the front-rear direction). As for the portions of the wire harnesses 21 to 23 extending in the front-rear direction, the high-voltage power supply wire harness 21 is disposed below the low-voltage power supply wire harness 22 and the signal wire harness 23.

Further, the above-described portions of the low-voltage power supply wire harness 22 and the signal wire harness 23 extending in the front-rear direction are arranged at the same height position. As shown in FIG. 5, as for the portions arranged at this same height position, the signal wire harness 23 is positioned on the left side of the low-voltage power supply wire harness 22. In FIG. 6A, the portions arranged at the same height position are shown in an overlapping manner. The low-voltage power supply wire harness 22 disposed on the left side surface of the engine body 1 is a wire harness including an electric wire for supplying electric power to the left injector 16L (see FIG. 4).

In the present embodiment, the wire harnesses 21 to 23 disposed on the left side surface of the engine 100 are disposed on the left side of the left bank LB. That is, the wire harnesses 21 to 23 disposed on the left side surface of the engine 100 are disposed on the opposite side of the inter-bank area VA with the left bank LB interposed therebetween. As described above, in the engine 100, the exhaust manifold (exhaust pipe) 6, which tends to have a high temperature, is disposed in the inter-bank area VA. Therefore, in the engine 100, the temperature of the inter-bank area VA tends to be high. In this regard, in the present embodiment, the wire harnesses 21 to 23 disposed on the left side surface of the engine 100 are disposed on the opposite side of the inter-bank area VA with the left bank LB interposed therebetween. For this reason, the left bank LB is used as a wall that prevents leakage of the heat of the inter-bank area VA, and it is possible to suppress the high-voltage electric wire and the low-voltage electric wire disposed on the left side surface of the engine 100 from being damaged by heat.

In the present embodiment, as shown in FIG. 6A, the engine 100 includes an oil filter device 24 disposed below the intake pipe 5. The oil filter device 24 is disposed on the left side surface of the engine 100. Specifically, the oil filter device 24 is an oil filter device for purifying fuel. However, the oil filter device 24 may be another oil filter device such as an oil filter device that purifies lubricant oil.

As shown in FIG. 6A, each of the high-voltage power supply wire harness 21, the low-voltage power supply wire harness 22, and the signal wire harness 23 is disposed, on the left side surface of the engine 100, between the intake pipe 5 and the oil filter device 24 in the up-down direction. That is, the high-voltage electric wire (first electric wire) is disposed between the intake pipe 5 and the oil filter device 24 in the up-down direction. Further, the low-voltage electric wire (second electric wire) is arranged between the intake pipe 5 and the oil filter device 24 in the up-down direction.

Since the high-voltage electric wire and the low-voltage electric wire are arranged above the oil filter device 24, it is possible to reduce the possibility that the oil filter is erroneously brought into contact with the high-voltage electric wire and the low-voltage electric wire when the oil filter of the oil filter device 24 is replaced. That is, damage to the high-voltage electric wire and the low-voltage electric wire can be reduced. Further, when the high-voltage electric wire and the low-voltage electric wire are disposed above the oil filter device 24, it is possible to reduce the possibility that the oil scattered at the time of replacement of the oil filter adheres to the high-voltage electric wire and the low-voltage electric wire. Thus, it is possible to reduce the possibility that a short circuit due to adhesion of oil occurs.

The high-voltage power supply wire harness 21 is connected to the alternator 19 on the left side surface side of the engine 100. Further, the high-voltage power supply wire harness 21 extends from the left side surface side to the rear surface side of the engine 100. The low-voltage power supply wire harness 22 and the signal wire harness 23 are connected to terminals in the junction box 18 on the left side surface side of the engine 100. The low-voltage power supply wire harness 22 and the signal wire harness 23 do not extend from the left side surface side to the rear surface side of the engine 100.

FIG. 7 is a view schematically showing the position of the high-voltage power supply wire harness 21 on the rear surface of the engine 100. As described above, the engine 100 includes the intercooler 8. As shown in FIG. 7, the high-voltage power supply wire harness 21 is disposed along an outer surface of the intercooler 8 on the rear surface of the engine 100.

The high-voltage power supply wire harness 21 disposed on the rear surface of the engine 100 is disposed on the opposite side of the inter-bank area VA (see FIG. 3) with the intercooler 8 interposed therebetween. That is, the high-voltage electric wire (first electric wire) included in the engine 100 is disposed on the opposite side of the inter-bank area VA with the intercooler 8 interposed therebetween.

In the present embodiment, as described above, the temperature of the inter-bank area VA tends to be high due to the presence of the exhaust manifold (exhaust pipe) 6. In this regard, in the present embodiment, the high-voltage electric wire is disposed on the opposite side of the inter-bank area VA with the intercooler 8 interposed therebetween. For this reason, the intercooler 8 is used as a wall that prevents leakage of heat of the inter-bank area VA, and it is possible to suppress the high-voltage electric wire disposed on the rear surface of the engine 100 from being damaged by heat.

As shown in FIG. 7, specifically, the intercooler 8 includes an intake air inlet portion 8a, a heat exchange portion 8b, and an intake air outlet portion 8c. The intake air inlet portion 8a is an inlet portion through which the intake air supplied from the turbocharger 7 enters the intercooler 8. Specifically, intake air is supplied to the intake air inlet portion 8a from the left turbocharger 7L and the right turbocharger 7R.

The heat exchange portion 8b is located downstream of the intake air inlet portion 8a in the flow direction of the intake air. In the heat exchange portion 8b, heat is exchanged between the cooling liquid (cooling water in the present embodiment) supplied from the cooling liquid pump 10 (see FIG. 2) and the intake air. That is, the intercooler 8 of the present embodiment is a liquid cooling type.

The intake air outlet portion 8c is located downstream of the heat exchange portion 8b in the flow direction of the intake air. The intake air outlet portion 8c is an outlet portion through which the intake air cooled in the heat exchange portion 8b is discharged from the intercooler 8. Specifically, the intake air outlet portion 8c has a left intake air outlet portion that supplies the intake air to the left intake manifold 5L and a right intake air outlet portion that supplies the intake air to the right intake manifold 5R.

In the present embodiment, as a preferred form, the high-voltage power supply wire harness 21 is disposed, on the rear surface of the engine 100, along the outer surface of the intake air outlet portion 8c. That is, the high-voltage electric wire (first electric wire) is disposed along the intake air outlet portion 8c. In such a configuration, the high-voltage electric wire is disposed in a portion through which cooled intake air passes and which tends to have a relatively low temperature as compared to other portions of the intercooler 8. Therefore, it is possible to prevent the high-voltage electric wire from being damaged by heat. In the present embodiment, since the intercooler 8 is of a liquid cooling type, the cooling efficiency of intake air is higher than that of an air cooling type, and it is possible to further reduce the possibility that the high-voltage electric wire is damaged by heat.

FIG. 8 is a view schematically showing the positions of the wire harnesses 21 and 22 on the right side surface of the engine 100. As shown in FIG. 8, the high-voltage power supply wire harness 21 extending from the rear surface to the right side surface of the engine 100 is connected to the starter 20 disposed at the rear portion of the right side surface of the engine 100. Substantially, the high-voltage power supply wire harness 21 is hardly disposed on the right side surface of the engine body 1. That is, substantially, the high-voltage electric wire is hardly disposed on the right side surface of the engine body 1.

The low-voltage power supply wire harness 22 is disposed on the right side surface of the engine 100 similarly to the left side surface. The low-voltage power supply wire harness 22 is a wire harness for supplying electric power to the right injector 16R (see FIG. 4). At least a portion of the low-voltage power supply wire harness 22 disposed on the right side surface of the engine 100 is also disposed at a position separated downward from the intake pipe 5.

The low-voltage power supply wire harness 22 disposed on the right side surface of the engine 100 is disposed on the right of the right bank RB. That is, the low-voltage power supply wire harness 22 disposed on the right side surface of the engine 100 is disposed on the opposite side of the inter-bank area VA with the right bank RB interposed therebetween. As described above, the inter-bank area VA tends to have a high temperature due to the presence of the exhaust manifold (exhaust pipe) 6. In this regard, in the present embodiment, the low-voltage power supply wire harness 22 is disposed on the opposite side of the inter-bank area VA with the right bank RB interposed therebetween. For this reason, the right bank RB is used as a wall that prevents leakage of heat of the inter-bank area VA, and it is possible to suppress the low-voltage electric wire disposed on the right side surface of the engine 100 from being damaged by heat.

As shown in FIG. 8, a cooling liquid pipe 25 is disposed on the right side surface of the engine body 1. That is, the engine 100 includes the cooling liquid pipe 25 disposed on one side surface (right side surface) opposite to the other side surface (left side surface) of the engine body 1 with the crankshaft interposed therebetween. Specifically, the cooling liquid pipe 25 is a cooling liquid pipe that constitutes a cooling liquid passage for supplying the cooling liquid to the intercooler 8.

In the present embodiment, as described above, the high-voltage electric wire is hardly disposed on the right side surface of the engine body 1. Therefore, when the cooling liquid pipe 25 is disassembled for maintenance or the like, it is possible to reduce the possibility that the cooling liquid scatters and adheres to the high-voltage electric wire. That is, it is possible to reduce the possibility that a short circuit due to scattering of the cooling liquid during maintenance occurs.

In the present embodiment, although the high-voltage power supply wire harness 21 is mainly disposed on the left side surface among the right side surface and the left side surface of the engine 100, but this is merely an example. For example, in a case where the positions of the alternator 19 and the starter 20 in the left-right direction are opposite to those in the configuration of the present embodiment, the high-voltage power supply wire harness may be mainly disposed on the right side surface of the engine 100. Further, for example, the signal wire harness 23 may be arranged on the right side surface of the engine 100 in accordance with the arrangement of the ECU 17.

### <3. Notes, etc. >

The various technical features disclosed in the present specification can be modified in various ways without departing from the gist of the technical creation thereof. That is, the above embodiments should be considered exemplary in all respects and not restrictive. In addition, the multiple embodiments and modified examples shown in the present specification may be combined to the extent possible.

In the embodiment described above, the present invention is applied to the V-type engine. However, the above is merely an exemplification. The present invention can be applied to an engine of other type such as, for example, an in-line engine in which pistons reciprocate in the up-down direction, and a horizontally opposed engine in which pistons reciprocate in the horizontal direction.

### <4. Appendices>

An exemplary engine in the present specification may be a configuration (first configuration) comprising: an engine body including at least one cylinder row in which a plurality of cylinders are arranged in a front-rear direction; an intake pipe disposed on one side surface of the engine body and extending in the front-rear direction; and a first electric wire disposed below the intake pipe and along the one side surface.

The engine according to the above-described first configuration may be a configuration (second configuration) further comprising: a turbocharger; and an intercooler that cools intake air from the turbocharger, wherein the intake pipe is located downstream of the intercooler in a flow direction of intake air.

The engine according to the above-described first or second configuration may be a configuration (third configuration) further comprising: an oil filter device disposed below the intake pipe, wherein the first electric wire is disposed between the intake pipe and the oil filter device.

The engine according to any one of the above-described first to third configurations may be a configuration (fourth configuration) further comprising a cooling liquid pipe disposed on another side surface opposite to the one side surface with a crankshaft interposed therebetween.

The engine according to any one of the above-described first to fourth configurations may be a configuration (fifth configuration) wherein the engine is a V-type engine having two of the cylinder rows arranged side by side in a left-right direction, and the engine includes an exhaust pipe disposed in an inter-bank area existing between a first bank including one of the two cylinder rows and a second bank including the other one of the two cylinder rows.

The engine according to the above-described fifth configuration may be a configuration (sixth configuration) further comprising: an intercooler disposed on one side of the inter-bank area, wherein the first electric wire is disposed on an opposite side of the inter-bank area with the intercooler interposed therebetween.

The engine according to any one of the above-described first to sixth configurations may be a configuration (seventh configuration) further comprising: a second electric wire different from the first electric wire, wherein the second electric wire is disposed on the one side surface to be separated downward from the intake pipe and to be spaced apart from the first electric wire.

The engine according to any one of the above-described first to seventh configurations may be a configuration (eighth configuration) further comprising: an intercooler disposed on one side of the engine body in the front-rear direction, wherein the intercooler includes an intake air inlet portion and an intake air outlet portion, and the first electric wire is disposed along an outer surface of the intake air outlet portion.

The engine according to any one of the above-described second, sixth, and eighth configurations may be a configuration (ninth configuration) wherein the intercooler is of a liquid cooling type.

### REFERENCE SIGNS LIST

1 engine body
5 intake manifold (intake pipe)
6 exhaust manifold (exhaust pipe)
7 turbocharger
8 intercooler
8a intake air inlet portion
8b heat exchange portion
8c intake air outlet portion
15 cylinder row
15L left cylinder row
15R right cylinder row
21 high-voltage power supply wire harness
22 low-voltage power supply wire harness
23 signal wire harness
24 oil filter device
25 cooling liquid pipe
100 engine
LB left bank (first bank or second bank)
RB right bank (first bank or second bank)
VA inter-bank area

## Claims

1. An engine comprising:
an engine body including at least one cylinder row in which a plurality of cylinders are arranged in a front-rear direction;
an intake pipe disposed on one side surface of the engine body and extending in the front-rear direction; and
a first electric wire disposed below the intake pipe and along the one side surface.

2. The engine according to claim 1, further comprising:
a turbocharger; and
an intercooler that cools intake air from the turbocharger,
wherein the intake pipe is located downstream of the intercooler in a flow direction of intake air.

3. The engine according to claim 1, further comprising:
an oil filter device disposed below the intake pipe,
wherein the first electric wire is disposed between the intake pipe and the oil filter device.

4. The engine according to claim 1, further comprising a cooling liquid pipe disposed on another side surface opposite to the one side surface with a crankshaft interposed therebetween.

5. The engine according to claim 1, wherein
the engine is a V-type engine having two of the cylinder rows arranged side by side in a left-right direction, and
the engine includes an exhaust pipe disposed in an inter-bank area existing between a first bank including one of the two cylinder rows and a second bank including the other one of the two cylinder rows.

6. The engine according to claim 5, further comprising:
an intercooler disposed on one side of the inter-bank area,
wherein the first electric wire is disposed on an opposite side of the inter-bank area with the intercooler interposed therebetween.

7. The engine according to claim 1, further comprising:
a second electric wire different from the first electric wire,
wherein the second electric wire is disposed on the one side surface to be separated downward from the intake pipe and to be spaced apart from the first electric wire.

8. The engine according to claim 1, further comprising:
an intercooler disposed on one side of the engine body in the front-rear direction,
wherein the intercooler includes
an intake air inlet portion and
an intake air outlet portion, and
the first electric wire is disposed along an outer surface of the intake air outlet portion.

9. The engine according to any one of claims 2, 6, and 8, wherein the intercooler is of a liquid cooling type.
